**Europäisches Patentamt**

**European Patent Office**

**Office européen des brevets**

(19)

(11) Numéro de publication : **0 407 282 B1**

(12) # FASCICULE DE BREVET EUROPEEN

(45) Date de publication du fascicule du brevet :
**04.11.92 Bulletin 92/45**

(51) Int. Cl.⁵ : **F16B 37/04, F16B 37/02**

(21) Numéro de dépôt : **90401901.5**

(22) Date de dépôt : **29.06.90**

(54) **Ecrou en forme de pince à montage sur le bord d'un panneau ou analogue.**

(30) Priorité : **06.07.89 FR 8909134**

(43) Date de publication de la demande :
**09.01.91 Bulletin 91/02**

(45) Mention de la délivrance du brevet :
**04.11.92 Bulletin 92/45**

(84) Etats contractants désignés :
**DE ES IT**

(56) Documents cités :
**DE-A- 2 617 940**
**FR-A- 1 190 342**
**FR-A- 1 257 542**
**GB-A- 969 809**

(73) Titulaire : **RAPID S.A.**
**251 Boulevard Péreire**
**F-75852 Paris Cédex 17 (FR)**

(72) Inventeur : **Dubost, Dominique**
**53 Résidence Elysées II**
**F-78170 La Celle Saint Cloud (FR)**

(74) Mandataire : **Durand, Yves Armand Louis et al**
**CABINET WEINSTEIN 20, Avenue de**
**Friedland**
**F-75008 Paris (FR)**

## Description

La présente invention a essentiellement pour objet un écrou en forme de pince que l'on peut monter sur le bord d'un panneau ou analogue.

On a déjà proposé sur le marché des écrous en forme de pince élastique, c'est-à-dire présentant la forme générale d'un U en section transversale et dont les deux branches sont insérables sur le bord d'un panneau.

Généralement, l'une des deux branches comporte un fût taraudé apte à recevoir un élément fileté quelconque, tel qu'une vis, qui peut traverser tant l'écrou que le panneau sur le bord duquel il est monté.

Toutefois, ce genre d'écrou présente un certain nombre d'inconvénients parmi lesquels il faut citer la relativement faible surface d'appui des deux branches de l'écrou sur les deux faces du panneau recevant cet écrou, et la difficulté d'adaptation des branches de l'écrou auxdites faces du panneau, surtout lorsque ce dernier comporte des faces qui ne sont pas parallèles.

Aussi, la présente invention a pour but de résoudre ces problèmes en proposant un écrou en pince permettant notamment l'auto-adaptation de l'appui des branches de l'écrou sur les faces du panneau et au niveau du bord de ce panneau sur lequel est monté l'écrou par pincement.

A cet effet, l'invention a pour objet un écrou en forme de pince insérable par ses deux branches sur le bord d'un panneau ou analogue et du type comportant un fût taraudé apte à recevoir un élément fileté quelconque qui peut traverser tant l'écrou que le panneau, ledit fût taraudé étant solidaire d'un insert qui est interposé entre les deux branches de l'écrou et qui est retenu entre ces deux branches par le fût taraudé passant au travers d'une ouverture ménagée dans l'une des branches de l'écrou (voir GB-A-969 809).

Cet insert est avantageusement monté flottant entre les deux branches de l'écrou, ce qui lui confère des qualités d'auto-adaptation aux faces du panneau sur lequel il est monté.

Selon l'invention, le bord de l'ouverture au travers de laquelle passe le fût taraudé de l'insert est muni de griffes ou analogues de préférence légèrement relevées par rapport au plan de la branche dans laquelle est ménagée ladite ouverture, tandis que l'insert comporte deux bords opposés repliés et s'étendant respectivement sur les deux côtés de l'écrou pour empêcher la rotation de l'insert dans l'écrou.

L'insert peut encore comporter un bord replié faisant saillie du côté de l'extrémité libre des deux branches de l'écrou, ce qui facilite son insertion sur le bord du panneau.

L'insert peut aussi être constitué par une platine sensiblement rectangulaire comportant les trois bords repliés précités et portant sur l'une de ses faces le fût taraudé précité.

Mais d'autres avantages de l'invention apparaîtront mieux dans la description détaillée qui suit et se réfère aux dessins annexés, donnés uniquement à titre d'exemple, et dans lesquels :

La figure 1 est une vue en perspective d'un écrou selon cette invention ;

La figure 2 est une vue en plan et de dessus de cet écrou ;

La figure 3 est une vue de côté de l'écrou ; et

La figure 4 est une vue en coupe de l'écrou suivant la ligne IV-IV de la figure 2, l'écrou étant représenté en position montée sur un panneau dont les deux faces ne sont pas parallèles.

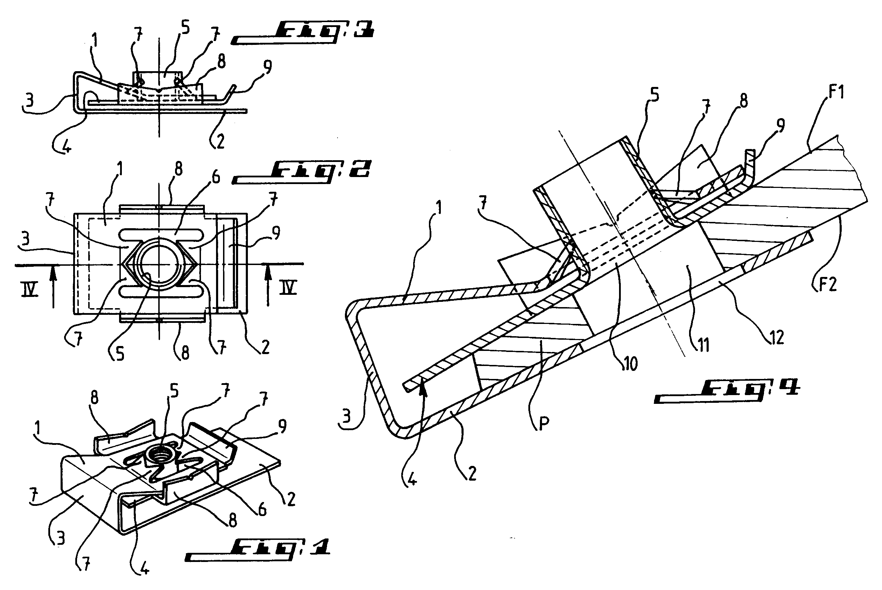

En se reportant notamment aux figures 1 à 3, on voit un écrou en forme de pince comportant, comme connu en soi, deux branches 1, 2 raccordées à une extrémité par une partie 3, de sorte que l'écrou présente grossièrement forme d'un U en section transversale, cet U pouvant être inséré sur le bord d'un panneau P.

Conformément à l'invention, entre les branches 1 et 2, est interposé un insert 4 qui porte un fût taraudé 5 passant au travers d'une ouverture 6 ménagée dans la branche 1 de l'écrou.

Ainsi, comme on le comprend, l'insert 4 est retenu entre les deux branches 1 et 2 grâce au fût taraudé 5 lui même retenu par l'ouverture 6 dans la branche 1.

On précisera ici que, selon l'invention, cet insert 4 est avantageusement monté flottant entre les deux branches 1 et 2 de l'écrou, c'est-à-dire qu'un certain jeu sera prévu entre le fût ou la cheminée 5 et le bord de l'ouverture 6.

Comme on le voit bien sur les figures 1 et 2 notamment, le bord de l'ouverture 6 est pourvu de griffes 7, par exemple deux paires de griffes opposées suivant l'exemple de réalisation représenté.

Ces griffes 7, comme on le voit bien sur les figures 1, 3 et 4, sont légèrement relevées par rapport au plan de la branche 1 dans laquelle est ménagée l'ouverture 6. On observera encore que les griffes 7 peuvent être obtenues par un découpage réalisé dans la branche 1, ce après quoi lesdites griffes sont repliées pour faire légèrement saillie au-dessus du plan de la branche 1, comme on le voit bien sur les figures.

L'insert 4 comporte deux bords opposés et repliés 8, ces bords s'étendant respectivement sur les deux côtés de l'écrou pour empêcher la rotation dudit insert 4 dans celui-ci.

On remarquera ici que les bords 8 sont repliés de façon à s'étendre au-dessus du plan de la branche 1 de l'écrou.

L'insert 4 comporte encore un bord replié 9 faisant saillie du côté de l'extrémité libre des deux branches 1 et 2 de l'écrou, pour ainsi faciliter l'insertion de cet écrou sur le panneau P, comme on le décrira plus loin à propos du montage.

Suivant l'exemple de réalisation représenté, l'insert 4 est constitué par une platine sensiblement rectangulaire dont les grands côtés comportent les bords opposés 8 et dont un petit côté comporte le bord relevé 9. Le fût taraudé 5 est solidaire de l'insert ou platine 4 sensiblement en son milieu, et au droit du fût taraudé 5, l'insert ou platine 4 comporte bien sûr un orifice 10 permettant le passage d'un élément fileté (non représenté) qui pourra passer également au travers d'un orifice 11 ménagé dans le panneau P (figure 4) et d'un orifice 12 prévu dans la branche 2 de l'écrou.

On voit clairement sur la figure 4, que l'écrou selon cette invention et qui vient d'être décrit peut facilement s'auto-adapter au panneau P si celui-ci comporte des faces $F_1$, $F_2$ non parallèles, par le fait que l'insert ou platine 4 est monté légèrement flottant entre les deux branches 1 et 2 de l'écrou. Plus précisément, cette auto-adaptation résultera d'un certain degré de liberté entre la périphérie du fût taraudé 5 et les griffes 7 de l'ouverture 6.

Autrement dit, les deux branches de l'écrou prendront parfaitement appui sur les deux faces du panneau P par insert interposé 4. On obtiendra par conséquent une surface d'appui maximum de l'écrou sur les faces du panneau P, quel que soit le parallélisme des faces de ce panneau.

En outre, du fait du montage flottant de l'insert ou platine 4 entre les deux branches 1 et 2 de l'écrou, l'insertion de l'écrou sur le bord du panneau P sera facilitée.

Bien entendu, l'invention n'est nullement limitée au mode de réalisation décrit et illustré qui n'a été donné qu'à titre d'exemple.

C'est ainsi que les matières pour réaliser l'écrou de l'invention peuvent être quelconques, de même que le diamètre du fût taraudé et le nombre et la forme des griffes retenant ce fût peuvent être quelconques. Il faut encore noter que les griffes en question peuvent éventuellement être omises, de même que des moyens supplémentaires peuvent être prévus sur les branches de l'écrou et sur l'insert pour faciliter l'accrochage sur les faces du panneau. Cela étant, on observera que l'auto-accrochage de l'écrou sur les faces du panneau est déjà réalisé par l'adaptation automatique de la platine ou insert 4 sur lesdites faces.

## Revendications

1. Ecrou en forme de pince insérable par ses deux branches (1, 2) sur le bord d'un panneau ou analogue (P) et du type comportant un fût taraudé (5) apte à recevoir un élément fileté quelconque qui peut traverser tant l'écrou que le panneau (P), ledit fût taraudé (5) étant solidaire d'un insert (4) qui est interposé entre les deux branches (1, 2) de l'écrou et qui est retenu entre ces deux branches par le fût taraudé (5) passant au travers d'une ouverture (6) ménagée dans l'une (1) des branches de l'écrou, caractérisé en ce que le bord de l'ouverture (6) au travers de laquelle passe le fût taraudé (5) de l'insert est muni de griffes (7) de préférence légèrement relevées par rapport au plan de la branche (1) dans laquelle est ménagée ladite ouverture, tandis que l'insert (4) comporte deux bords opposés repliés (8) et s'étendant respectivement sur les deux côtés de l'écrou pour empêcher la rotation de l'insert dans l'écrou.

2. Ecrou selon la revendication 1, caractérisé en ce que l'insert précité (4) comporte un bord replié (9) faisant saillie du côté de l'extrémité libre des deux branches (1, 2) de l'écrou.

3. Ecrou selon la revendication 1 ou 2, caractérisé en ce que l'insert précité (4) est constitué par une platine sensiblement rectangulaire comportant les trois bords repliés précités (8, 9) et portant sur l'une de ses faces le fût taraudé précité (5).

## Patentansprüche

1. Mit ihren beiden Schenkeln (1, 2) an dem Rand einer Platte oder dergleichen (P) einsetzbare zangenförmige Mutter, derjenigen Gattung, die einen zur Aufnahme irgendeines Elementes mit Gewinde, welches sowohl die Mutter als die Platte (P) durchsetzen kann, aufweisenden Schaft mit Gewindebohrung (5) aufweist, wobei der besagte Schaft mit Gewindebohrung (5) mit einem Einsatz (4) fest verbunden ist, der zwischen den beiden Schenkeln (1, 2) der Mutter gefügt ist und der zwischen diesen beiden Schenkeln durch den eine in einem (1) der Schenkel der Mutter gebildete Oeffnung (6) durchsetzenden Schaft mit Gewindebohrung (5) zurückgehalten wird, dadurch gekennzeichnet, dass der Rand der Oeffnung (6), durch welche der Schaft mit Gewindebohrung (5) des Einsatzes geführt ist, mit vorzugsweise in Bezug auf die Ebene des Schenkels (1) in welcher die besagte Oeffnung gebildet ist, leicht geschweifte Klauen (7) versehen ist, während der Einsatz (4) zwei umgebogene entgegengesetzte und jeweils an den beiden Seiten der Mutter zur Verhinderung der Drehung des Einsatzes in der Mutter verlaufende Ränder aufweist.

2. Mutter nach Anspruch 1, dadurch gekennzeichnet, dass der vorgenannte Einsatz (4) einen auf der dem freien Ende der beiden Schenkel (1, 2) der Mutter zugewandten Seite vorspringenden umgebogenen Rand (9) aufweist.

3. Mutter nach Anspruch 1 oder 2, dadurch gekennzeichnet, dass der vorgenannte Einsatz (4) durch ein die drei vorgenannten umgebogenen Ränder (8, 9) aufweisenden und auf einer seiner Seiten den vorgenannten Schaft mit Gewindebohrung (5) tragendes etwa rechteckiges Plättchen gebildet wird.

## Claims

1. Pliers-shaped nut insertable with its two cheeks (1, 2) onto the edge of a panel or the like (P) and of the type comprising a tapped shank (5) adapted to receive any threaded element whatsoever which may extend through the nut as well as through the panel (P), the said tapped shank (5) being made fast to an insert (4) which is interposed between both cheeks (1, 2) of the nut and which is retained between these two cheeks by the tapped shank (5) passing through an opening (6) formed in one (1) of the cheeks of the nut, characterized in that the edge of the opening (6) through which passes the tapped shank (5) of the insert is provided with claws (7) preferably slightly raised with respect to the plane of the cheek (1) in which is formed the said opening whereas the insert (4) comprises two folded-back opposite edges (8) extending on both sides of the nut, respectively, to prevent the rotation of the insert within the nut.

2. Nut according to claim 1, characterized in that the aforesaid insert (4) comprises a bent edge (9) projecting towards the free end of both cheeks (1, 2) of the nut.

3. Nut according to claim 1 or 2, characterized in that the aforesaid insert (4) is constituted by a substantially rectangular plate comprising the three aforesaid bent edges (8, 9) and carrying on one of its faces the aforesaid tapped shank (5).

Fig. 1

Fig. 2

Fig. 3

Fig. 4